# EUROPÄISCHE PATENTSCHRIFT

(11) **EP 4 418 819 B1**
(45) Veröffentlichungstag und Bekanntmachung des Hinweises auf die Patenterteilung: **27.05.2026**
(21) Anmeldenummer: 23156483.2
(22) Anmeldetag: 14.02.2023
(51) Int. Cl.: H05B 6/64, A47J 27/088

(54) **VORRICHTUNG UND VERFAHREN ZUM DAMPFDRUCKGAREN VON LEBENSMITTELN**
DEVICE AND METHOD FOR PRESSURE-COOKING FOOD
DISPOSITIF ET PROCÉDÉ DE CUISSON SOUS PRESSION DE VAPEUR D'ALIMENTS

(43) Veröffentlichungstag der Anmeldung: 21.08.2024
(73) Patentinhaber: Bacombe AG, 1965 Savièse (CH)
(72) Erfinder: Mühleisen, Michael, Hamburg (DE)
(74) Vertreter: Sandvoß, Stefanie

(56) Entgegenhaltungen:
- WO-A1-2008/128493
- WO-A1-2019/243931
- DE-U1- 202004 009 000
- KR-A- 20070 062 805
- US-A- 5 945 021

## Beschreibung

Die vorliegende Erfindung betrifft eine Vorrichtung und ein Verfahren zum Dampfdruckgaren von Lebensmitteln mittels Mikrowellen.

Aus dem Stand der Technik sind bereits zahlreiche Vorrichtungen zum Dampfdruckgaren mittels Mikrowellen bekannt. Diese bieten den Vorteil, innerhalb von nur kurzer Zeit Lebensmittel zu erwärmen, zu garen oder zu regenieren und finden sich daher mittlerweile in nahezu jeder modernen Küche wieder. Auch in Großküchen oder in Flugzeugen, in denen vorportioniertes Essen für Besucher bzw. Passagiere in Kürze erwärmt werden muss, kommen Mikrowellen-Geräte zum Einsatz.

Bei der Erwärmung von Lebensmitteln mittels Mikrowellen wirken die Mikrowellen auf Wassermoleküle, die sich in den zu erwärmenden Lebensmitteln befinden und bringen diese zum Rotieren, wodurch Reibung entsteht, die wiederum Wärme erzeugt. Durch das verdampfende Wasser wird Wasserdampf erzeugt, der im Inneren des Mikrowellen-Gerätes einen Überdruck im Vergleich zur Außenatmosphäre erzeugt. Daher verfügen aus dem Stand der Technik bekannte Mikrowellen-Geräte über Druckregulierungselemente, insbesondere Ventile, zum Druckabbau bzw. -ausgleich.

Ein gattungsgemäßes Gerät wird beispielsweise in der DE 20 2004 009 000 U1 beschrieben. Diese offenbart ein Gerät zum Druckgaren eines in einem Garbehälter aufgenommenen Lebensmittels mittels Mikrowellenstrahlung, wobei das Gerät über einen als Druckgarraum mit druckfester und druckdichter Tür ausgebildeten Garraum verfügt, der ein Überdruckventil aufweist, das auf einen bestimmten, sich im Druckgarraum ausbildenden Überdruck einstellbar ist.

An dem vorgenannten Gerät wie auch anderen aus dem Stand der Technik bekannten Geräten ist besonders nachteilhaft, dass der bei der Erwärmung von Lebensmitteln erzeugte Wasserdampf auf eine kalte Innenraumverkleidung trifft und dort kondensiert. Die sich auf diese Weise bildenden Kondensattröpfchen tropfen auf das zu garende Gericht und es kommt zu einer unerwünschten Flüssigkeitsansammlung auf dem Gargut bzw. dem Träger, auf dem dieses angeordnet ist, was als sensorisch nachteilhaft empfunden wird.

Weiterhin hat sich herausgestellt, dass nach Abschluss des Garprozesses und Ableitung des bestehenden Überdrucks mittels des Überdruckventils ein Unterdruck im Inneren des Gerätes entsteht, der ein Öffnen der Tür zum Garraum sehr erschwert oder sogar unmöglich macht, wenn diese nicht unmittelbar nach dem Ableiten des Überdrucks geöffnet wird.

Die US 5 945 021 A beschreibt eine Vorrichtung zum Erwärmen von Lebensmitteln mittels Mikrowellen und Wasserdampf. Die Vorrichtung weist dabei mehrere Kompartimente auf, die Wasser und das zu erwärmende Lebensmittelprodukt enthalten. Das Wasser wird durch Mikrowellenbehandlung verdampft, sodass die in den Kompartimenten enthaltenen Lebensmittel einerseits durch Mikrowellen und andererseits durch den entstehenden Wasserdampf erhitzt werden.

Die WO 2008/128493 beschreibt ein Behältnis zum Erwärmen von Nahrungsmitteln mittels Mikrowellen, das durch eine mit einem Hygieneschutzelement verschlossene Gasdurchtrittsöffnung einen Druckausgleich zwischen dem Garraum und der Außenatmosphäre ermöglicht. Zur Vermeidung unerwünschter Kondensatbildung wird ein Wärmespeicherelement offenbart, in dem eine bestimmte Menge an Wärmeenergie gespeichert und nach Abschluss des Garvorgangs an die Lebensmittel abgegeben wird. Insbesondere können das Gargefäß selbst und/oder der Deckel in der Art eines Wärmespeicherelementes ausgebildet sein und vorzugsweise kann das Wärmespeicherelement als Wärmespeicherschicht von einer Lackschicht auf der Innenseite des Behälters gebildet werden, wobei sich der Lack bei Zufuhr elektromagnetischer Energie durch die Mikrowellenstrahlen erhitzt und diese Wärmeenergie später an die Lebensmittel bzw. das umgebende Material des Gefäßes abgibt.

### Aufgabe der Erfindung

Es ist die Aufgabe der vorliegenden Erfindung, eine alternative Vorrichtung und ein Verfahren zum Dampfdruckgaren von Lebensmitteln mittels Mikrowellen bereitzustellen, die die vorgenannten aus dem Stand der Technik bekannten Nachteile überwinden und sich insbesondere dadurch auszeichnen, dass die in der Vorrichtung gegarten Lebensmittel nicht mit herabtropfendem Kondensat kontaktiert werden. Weiterhin soll die durch die vorliegende Erfindung bereitgestellte Vorrichtung vorzugsweise auch für einen Einsatz in Großküchen geeignet sein.

### Allgemeine Beschreibung der Erfindung

Die Erfindung löst diese Aufgabe mit den Merkmalen der Ansprüche und insbesondere mit einer Vorrichtung zum Dampfdruckgaren eines auf oder in einem Gargutträger angeordneten Garguts mittels Mikrowellenstrahlung, wobei die Vorrichtung eine Einrichtung zur Erzeugung von Mikrowellen, insbesondere ein oder mehrere Magnetrone, und einen Garraum aufweist, der von zumindest einer druckdichten Tür zum Einbringen bzw. Entnehmen des zu garenden Garguts und von Innenraumwänden umgeben ist, und wobei die Vorrichtung weiterhin eine Heizvorrichtung aufweist, die eingerichtet ist, die den Garraum umgebenden Innenraumwände teilweise oder vollständig zu beheizen.

Vorzugsweise weist die erfindungsgemäße Vorrichtung eine Antenne auf, mittels derer die von der Einrichtung zur Erzeugung von Mikrowellen erzeugten Mikrowellen homogen verteilt werden.

Für die Zwecke der vorliegenden Erfindung wird unter "Garen" bzw. "Dampfdruckgaren" ein Erwärmen von Gargut mittels Mikrowellenstrahlung verstanden. Dabei ist es unerheblich, ob das Gargut bereits vor dem Erwärmen mittels Mikrowellenstrahlung gegart war oder nicht. "Garen" bzw. "Dampfdruckgaren" kann daher auch ein bloßes Erwärmen oder Regenieren eines bereits fertig gegarten Garguts meinen.

Ein "Gargut" kann jedes beliebige Lebensmittel in jedem beliebigen Garzustand sein, das in der erfindungsgemäßen Vorrichtung mittels Mikrowellenstrahlung erwärmt wird.

Ein "Gargutträger" kann jedes beliebige mikrowellengeeignete Objekt sein, auf oder in dem Gargut angeordnet und erwärmt werden kann. Ein bevorzugter Gargutträger ist ein mikrowellengeeigneter Teller und ein weiterer bevorzugter Gargutträger ist ein mikrowellengeeignetes Gefäß, insbesondere ohne Deckel.

Es ist ein besonderer Vorteil der erfindungsgemäßen Vorrichtung, dass diese eine Heizvorrichtung aufweist, die die den Garraum umgebenden Innenraumwände der Vorrichtung teilweise oder vollständig beheizt. Auf diese Weise wird verhindert, dass der bei der Erwärmung des Garguts erzeugte Wasserdampf auf eine kalte Innenraumverkleidung der Vorrichtung trifft, dort kondensiert und in Form von Kondensattröpfchen auf das Gargut zurücktropft. Stattdessen trifft der Wasserdampf in der erfindungsgemäßen Vorrichtung auf vorgeheizte Innenraumwände, an denen er nicht kondensiert.

Eine beispielhafte Heizvorrichtung zum Beheizen der Innenraumwände umfasst oder besteht aus einer oder mehreren Heizspulen.

Die Heizvorrichtung ist erfindungsgemäß eingerichtet, die Innenraumwände teilweise oder vollständig zu beheizen, bevor die Kondensatbildung einsetzt, d.h. bereits vor oder zu Beginn des Garvorgangs, also der Erzeugung von Mikrowellen in der erfindungsgemäßen Vorrichtung. Vorzugsweise ist die Heizvorrichtung eingerichtet, bereits vor Beginn des Garvorgangs die Innenraumwände der Vorrichtung zu beheizen, insbesondere auf eine Temperatur zwischen 50 und 100 °C, besonders bevorzugt auf eine Temperatur zwischen 80 und 95 °C.

Weiterhin ist die Heizvorrichtung der erfindungsgemäßen Vorrichtung eingerichtet, die Innenraumwände vollständig oder nur teilweise zu beheizen. Dies bedeutet, dass optional nur manche der Innenraumwände, beispielsweise nur die Decke, beheizt werden, und/oder, dass die Innenraumwände nicht über ihre gesamte Fläche, sondern nur über einen Teil ihrer Fläche beheizt werden. Optional kann die Heizvorrichtung der erfindungsgemäßen Vorrichtung daher eingerichtet sein, eine oder mehrere der Innenraumwände über deren vollständige Fläche oder nur über einen Teil ihrer Fläche zu beheizen.

Gemäß einer bevorzugten Ausführungsform ist die Heizvorrichtung eingerichtet, die den Garraum umgebenden Innenraumwände unterschiedlich stark zu beheizen, wodurch sich unterschiedliche Temperaturzonen ausbilden. So kann es beispielsweise sein, dass ein Teil der Innenraumwände gar nicht beheizt ist, während ein anderer Teil auf eine erste Temperatur und noch ein weiterer Teil auf eine von der ersten Temperatur abweichende zweite Temperatur beheizt ist. Auf diese Weise lässt sich steuern, an welchen Innenraumwänden oder Teilen von Innenraumwänden eine Kondensatbildung unter allen Umständen zu vermeiden ist und/oder an welchen Innenraumwänden oder Teilen von Innenraumwänden eine Kondensatbildung möglicherweise sogar gewünscht ist.

Vorzugsweise weist zumindest ein Teil der Innenraumwände der erfindungsgemäßen Vorrichtung Ablaufrillen für sich während des Garvorgangs bildendes Kondensat auf. Diese Ablaufrillen sind auf der Fläche von Innenraumwänden angeordnete Vertiefungen, die Kondensat gezielt in Richtung des Bodens der Vorrichtung ableiten. Dort weist die Vorrichtung bevorzugt einen Ablass für Kondenswasser auf, über den dieses nach Beendigung eines Garvorgangs aus der Vorrichtung abgeführt werden kann.

In einer bevorzugten Ausführungsform weist die Vorrichtung ein Druckausgleichselement auf, das eingerichtet ist, sich vor oder zu Beginn der Erzeugung von Mikrowellen durch die Einrichtung zur Erzeugung von Mikrowellen zu schließen und nach Abschluss der Erzeugung von Mikrowellen durch die Einrichtung zur Erzeugung von Mikrowellen wieder zu öffnen. Dieses Druckausgleichselement kann insbesondere ein z.B. mechanisch gesteuertes Ventil sei. Optional handelt es sich bei dem vorgenannten Ablass für Kondenswasser um das Druckausgleichselement. In dieser Ausführungsform ist das Druckausgleichselement im Boden der Vorrichtung angeordnet. Alternativ kann das Druckausgleichselement jedoch auch zusätzlich zu dem vorgenannten Ablass für Kondenswasser vorgesehen sein, wobei es dann nicht notwendigerweise im Boden, sondern an jeder beliebigen geeigneten Stelle der Vorrichtung angeordnet sein kann.

Bevorzugt ist das Druckausgleichselement eingerichtet, unmittelbar nach dem Abschluss des Garvorgangs, d.h. nach Beendigung der Erzeugung von Mikrowellen, zu öffnen, sodass sich in der Vorrichtung kein Unterdruck aufbauen kann, der ein Öffnen der zumindest einen druckdichten Tür erschweren oder verhindern kann. Das Druckausgleichselement ist dabei insbesondere eingerichtet, erst beim Start eines neuen Garvorgangs wieder zu schließen. Dadurch, dass das Druckausgleichselement während der Nichtbenutzung geöffnet ist, wird zudem eine Schimmelbildung in dem Druckausgleichselement vermieden.

Vorteilhafterweise umgeben die Innenraumwände den Garraum der erfindungsgemäßen Vorrichtung röhrenförmig, wobei die zumindest eine druckdichte Tür an einer Stirnseite des röhrenförmig von den Innenraumwänden umgebenen Garraums angeordnet ist und eine optionale zweite druckdichte Tür an der gegenüberliegenden Stirnseite des röhrenförmig von den Innenraumwänden umgebenen Garraums angeordnet ist. Auch bei nicht röhrenförmigen Garräumen kann das Vorsehen einer zweiten druckdichten Tür sehr vorteilhaft sein. So kann zum Beispiel ein zu garendes Gargut auf einem Gargutträger aus einem Kaltbereich auf der einen Seite der erfindungsgemäßen Vorrichtung durch die erste druckdichte Tür in den Garraum eingebracht werden, und nach Abschluss des Garvorgangs durch eine zweite druckdichte Tür, die der ersten druckdichten Tür vorzugsweise gegenüberliegt, wieder aus der Vorrichtung entnommen werden. Dieser Aufbau mit zwei druckdichten Türen, von denen eine der Einführung und die andere der Entnahme von Gargut dient, ist besonders geeignet für den Einsatz in autonomen Roboterunits.

Gemäß einer Ausführungsform weist die erfindungsgemäße Vorrichtung eine Gargutträger-Aufnahme auf, auf der der Gargutträger mit dem darin oder darauf angeordneten Gargut für den Garvorgang platziert werden kann. Optional weist die Gargutträger-Aufnahme Durchbrechungen auf, durch die sich während des Garvorgangs bildendes Kondensat in Richtung des Bodens der Vorrichtung abgeleitet werden kann. Die Gargutträger-Aufnahme hat dabei vorzugsweise einen Durchmesser, der größer ist als der Durchmesser des Gargutträgers mit dem darin oder darauf angeordneten Gargut. Da die Innenraumwände oberhalb des Garguts vorzugsweise so stark beheizt sind, dass sich dort während des Garvorgangs kein Kondensat bildet, jedoch in den Bereichen, die sich nicht oberhalb des Garguts befinden, beispielsweise weniger stark oder gar nicht beheizt sind, können die sich in diesen Bereichen bildenden Kondensattröpfchen auf die Gargutträger-Aufnahme tropfen. Durch die optionalen Durchbrechungen in der Gargutträger-Aufnahme sammelt sich die Flüssigkeit auf dieser nicht, sondern fließt durch die Durchbrechungen in Richtung des Bodens der Vorrichtung ab, sodass ein auf der Gargutträger-Aufnahme angeordneter Gargutträger nach Abschluss des Garvorgangs und Entnahme aus der Vorrichtung nicht unterseits feucht ist, wie er es wäre, wenn er in auf der Gargutträger-Aufnahme gesammeltem Kondenswasser stünde. Am Boden der Vorrichtung kann das Kondenswasser nach Abschluss des Garvorgangs durch ein Ventil, z.B. das Druckausgleichselement abgelassen werden.

Es wurde gefunden, dass es für die Garung von Speisen in der erfindungsgemäßen Vorrichtung am vorteilhaftesten ist, wenn der Garraum so klein wie möglich ist. Auf diese Weise kann der für die Garung nötige Druckaufbau effektiv erzielt werden. Insbesondere kann der Garraum an die Maße von Tellern bzw. an die Maße von Gastronorm-Behältern angepasst sein, indem er diese Gargutträger mit darin angeordnetem Gargut aufnehmen kann, ohne dass ein großer Abstand zwischen den Rändern des Gargutträgers und den Innenraumwänden besteht. Es wurde gefunden, dass insbesondere ein Verhältnis von Gargut zu Garraum von 1:3 bis 1:4 vorteilhaft ist. Dies entspricht bei der Verwendung von mikrowellengeeigneten Tellern und Gastronorm-Behältern etwa einer Höhe des Garraums von 5-7 cm und einem Durchmesser, der vorzugsweise 1 bis 5 cm größer ist als der verwendete mikrowellengeeignete Teller bzw. Gastronorm-Behälter.

Gemäß einer Ausführungsform der vorliegenden Erfindung ist die Vorrichtung zum Dampfdruckgaren eines auf oder in einem Gargutträger angeordneten Garguts mittels Mikrowellenstrahlung stapelbar, sodass mehrere erfindungsgemäße Vorrichtungen platzsparend aufeinander angeordnet werden können. Dies ist besonders vorteilhaft für den Einsatz in Großküchen bzw. überall dort, wo viele Gerichte innerhalb von kurzer Zeit zu erwärmen sind. Zudem ist die stapelbare Ausführungsform geeignet für einen Einsatz bei geringem Platzangebot, wie z.B. in Flugzeugen.

Zusätzlich oder alternativ zu der vorgenannten Ausführungsform eignet sich für die Erwärmung vieler Gerichte innerhalb von kurzer Zeit auch eine weitere Ausführungsform der erfindungsgemäßen Vorrichtung, die als zusätzliche(n) Bestandteil(e) zumindest einen zweiten Garraum und optional beliebig viele weitere Garräume aufweist. Der zweite Garraum und die optionalen weiteren Garräume weisen dabei vorzugsweise ebenso wie der im Voranstehenden beschriebene erste Garraum teilweise oder vollständig beheizbare Innenraumwände auf, die ein Kondensieren des während des Garvorgangs entstehenden Wasserdampfs an unerwünschten Stellen verhindern. In Ausführungsformen mit mehreren Garräumen ist die erfindungsgemäße Vorrichtung wahlweise eingerichtet, jeden Garraum unabhängig von den anderen Garräumen mittels Mikrowellenstrahlung zu erhitzen. Alternativ kann die Vorrichtung jedoch auch eingerichtet sein, alle in der Vorrichtung enthaltenen Garräume gemeinsam zu erhitzen.

Die Erfindung betrifft weiterhin auch ein Verfahren zum Dampfdruckgaren eines auf oder in einem Gargutträger angeordneten Garguts mittels Mikrowellenstrahlung, wobei das Verfahren die folgenden Schritte aufweist:
- Bereitstellen einer Vorrichtung zum Dampfdruckgaren eines auf oder in einem Gargutträger angeordneten Garguts mittels Mikrowellenstrahlung, wobei die Vorrichtung eine Einrichtung zur Erzeugung von Mikrowellen und einen Garraum aufweist, der von zumindest einer druckdichten Tür zum Einbringen bzw. Entnehmen des zu garenden Garguts und von Innenraumwänden umgeben ist, wobei die Heizvorrichtung eingerichtet ist, die den Garraum umgebenden Innenraumwände teilweise oder vollständig zu beheizen;
- Einbringen eines auf oder in einem Gargutträger angeordneten Garguts in den Garraum und Verschließen der druckdichten Tür;
- Erzeugen von Mikrowellenstrahlung mittels der Einrichtung zur Erzeugung von Mikrowellen;
- Beheizen der den Garraum umgebenden Innenraumwände durch die Heizvorrichtung, wobei die Innenraumwände vollständig oder teilweise beheizt werden.

Vorzugsweise handelt es sich bei der in dem erfindungsgemäßen Verfahren bereitgestellten Vorrichtung um eine erfindungsgemäße Vorrichtung, die sämtliche im Voranstehenden beschriebenen Merkmale der erfindungsgemäßen Vorrichtung in beliebiger Kombination aufweisen kann.

Da zumindest ein Teil der Innenraumwände der in dem erfindungsgemäßen Verfahren verwendeten Vorrichtung Ablaufrillen aufweist, beinhaltet das erfindungsgemäße Verfahren vorzugsweise auch einen Schritt des Ablaufen lassens von Kondensat, das sich während des Garvorgangs, d.h. während ein Gargut in der Vorrichtung erwärmt wird, bildet, wobei dieser Schritt das Ablaufen lassen entlang der Ablaufrillen umfassen kann.

Weiterhin beinhaltet das erfindungsgemäße Verfahren vorzugsweise auch einen Schritt des Schließens eines Druckausgleichselements, der vor oder zu Beginn der Erzeugung von Mikrowellen durch die Einrichtung zur Erzeugung von Mikrowellen erfolgt, sowie einen Schritt des Öffnens des Druckausgleichselements, der nach Abschluss der Erzeugung von Mikrowellen durch die Einrichtung zur Erzeugung von Mikrowellen erfolgt.

Gemäß einer bevorzugten Ausführungsform des erfindungsgemäßen Verfahrens umfasst der Schritt des Beheizens der den Garraum umgebenden Innenraumwände durch die Heizvorrichtung ein unterschiedlich starkes Beheizen von Innenraumwänden, wodurch sich unterschiedliche Temperaturzonen in dem Garraum ausbilden. Beispielsweise kann das Beheizen der Innenraumwände nur das Beheizen bestimmter Innenraumwände beinhalten, während andere Innenraumwände nicht beheizt werden. Alternativ oder zusätzlich können auch nur Teile einer Innenraumwand auf eine bestimmte Temperatur erhitzt werden, während andere Teile gar nicht oder auf eine andere Temperatur beheizt werden. Es ist besonders bevorzugt, dass die Innenraumwand oberhalb des zu garenden Garguts stärker beheizt wird als andere Innenraumwände, z.B. auf eine Temperatur zwischen 80 und 100 °C, um zu verhindern, dass sich an der Innenraumwand oberhalb des Garguts Kondensat bildet, das auf das Gargut tropft.

Optional weist das erfindungsgemäße Verfahren auch einen Schritt der Entnahme des fertig gegarten Garguts aus der Vorrichtung zum Dampfdruckgaren auf, wobei die Entnahme des fertig gegarten Garguts bevorzugt durch eine zweite druckdichte Tür der Vorrichtung erfolgt, die der ersten druckdichten Tür, durch die das Gargut in die Vorrichtung eingebracht wurde, vorzugsweise gegenüberliegt.

Weiter optional kann in dem erfindungsgemäßen Verfahren auch eine Vorrichtung mit zwei oder mehr Garräumen bereitgestellt und zum Erwärmen des Garguts verwendet werden. In dieser Ausführungsform wird in beliebig viele der vorhandenen Garräume jeweils ein Gargutträger mit darauf angeordnetem Gargut eingebracht. Wahlweise werden die unterschiedlichen Garräume dabei simultan und auf gleiche Weise oder unabhängig voneinander von der Einrichtung zur Erzeugung von Mikrowellen, die auch mehrere Einrichtungen zur Erzeugung von Mikrowellen umfassen kann, erwärmt.

### Genaue Beschreibung der Erfindung

Die Erfindung wird nun genauer anhand von Ausführungsbeispielen und mit Bezug auf die Figuren beschrieben, die schematisch
- in der Figur 1 eine erfindungsgemäße Vorrichtung vor, während und nach der Garung eines Garguts zeigen;
- in der Figur 2 eine weitere Ausführungsform einer erfindungsgemäßen Vorrichtung in einer Schnittansicht zeigen; und
- in der Figur 3 eine Ausführungsform einer Innenraumwand einer erfindungsgemäßen Vorrichtung zeigen.

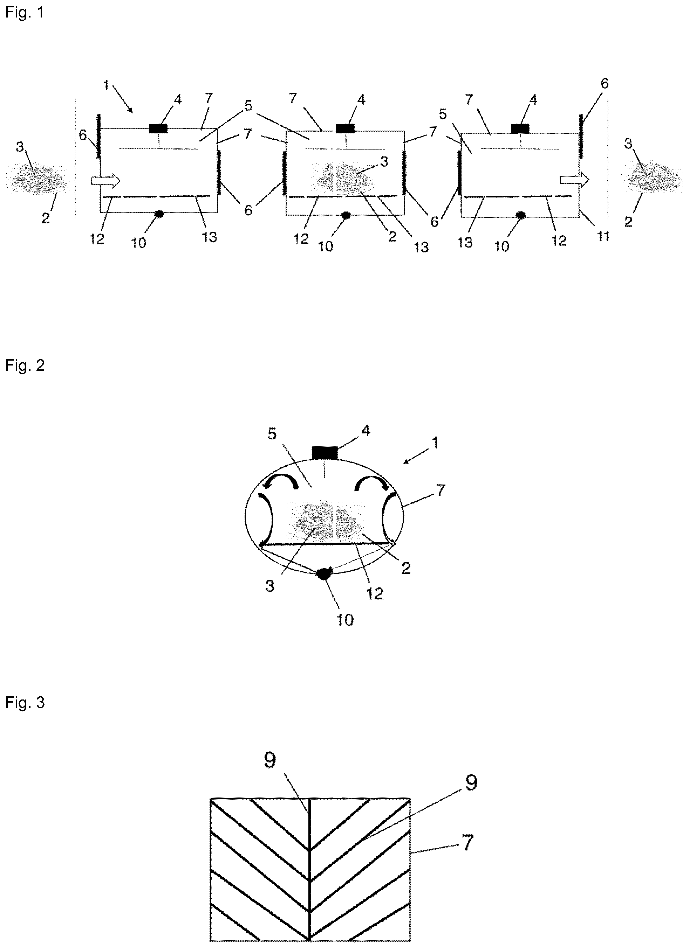

In der Figur 1 ist schematisch eine Ausführungsform einer erfindungsgemäßen Vorrichtung **1** vor, während und nach der Garung eines Garguts **3** gezeigt. Der linke Teil der Figur zeigt die Vorrichtung **1** vor dem Dampfdruckgaren eines auf einem Teller als Gargutträger **2** angeordneten Garguts **3** mittels Mikrowellenstrahlung.

Die Vorrichtung **1** weist ein Magnetron als Einrichtung **4** zur Erzeugung von Mikrowellen sowie einen Garraum **5** auf. Der Garraum **5** ist von Innenraumwänden **7** sowie von zwei an gegenüberliegenden Seiten der Vorrichtung 1 angeordneten Türen **6** zum Einbringen bzw. Entnehmen des zu garenden Garguts umgeben. Weiterhin weist die Vorrichtung **1** eine Heizvorrichtung **8** auf, die eingerichtet ist, die den Garraum **5** umgebenden Innenraumwände **7** teilweise oder vollständig zu beheizen. Die Heizvorrichtung **8** ist in der gezeigten Ausführungsform in den beheizten Innenraumwänden **7** integriert und daher nicht separat gezeigt.

Am Boden der Vorrichtung **1** weist diese ein Druckausgleichselement **10** in Form eines mechanisch gesteuerten Ventils auf. Dieses ist bevorzugt eingerichtet, zu Beginn eines Garvorgangs zu schließen und nach Beendigung des Garvorgangs wieder zu öffnen.

Im unteren Teil der Vorrichtung weist diese eine Gargutträger-Aufnahme **12** mit Durchbrechungen **13** auf. Sich während des Garvorgangs bildendes Kondenswasser, das auf die Gargutträger-Aufnahme **12** tropft, kann durch die Durchbrechungen **13** abfließen und nach Beendigung des Garvorgangs über das geöffnete Druckausgleichselement **10** aus der Vorrichtung **1** abgeführt werden.

Im mittleren Teil der Figur 1 ist die erfindungsgemäße Vorrichtung **1** während eines Garvorgangs gezeigt. Auf der Gargutträger-Aufnahme **12** ist ein Gargutträger **2** mit darauf befindlichem Gargut **3** angeordnet. Die beiden druckdichten Türen **6** sind verschlossen.

Im rechten Teil der Figur 1 ist die erfindungsgemäße Vorrichtung **1** nach Beendigung des Garvorgangs und Entnahme des Gargutträgers **2** mit dem darauf befindlichen Gargut **3** gezeigt. Die im Bild rechts dargestellte Tür **6** ist geöffnet, da der Gargutträger **2** mit dem Gargut **3** durch diese Tür **6** entnommen wurde.

In der Figur 2 ist eine weitere Ausführungsform der erfindungsgemäßen Vorrichtung **1** während eines Garvorgangs in einer Schnittansicht mit symbolisch dargestelltem Gargut **3** im Garraum **5** gezeigt. Durch die Pfeile ist die Bildung und Ableitung von Wasserdampf während des Garvorgangs angedeutet. Der bei der Erhitzung des Garguts **3** entstehende Wasserdampf trifft auf die beheizten Innenraumwände **7** im oberen Teil der Vorrichtung **1** und kondensiert dort nicht, sondern erst im unteren Teil der Vorrichtung **1,** wo er nicht mehr in Form von Kondensattröpfchen auf das Gargut **3** tropfen kann, sondern durch die rohrförmige Geometrie der Vorrichtung in Richtung von deren Boden und dem darin angeordneten Druckausgleichselement **10** abfließen kann.

In der Figur 3 ist schematisch eine Innenraumwand **7** mit darin angeordneten Ablaufrillen **9** gezeigt. Es versteht sich, dass die Ablaufrillen **9** sowohl in ihrer Form als auch in ihrer Anzahl variieren können, denn für ihre Funktion ist nur wichtig, dass Kondensat aus oberen Bereichen der Innenraumwände **7** in Richtung des Bodens der Vorrichtung **1** ablaufen kann, anstatt auf das Gargut **3** zu tropfen.

Die in der vorstehenden Beschreibung, in den Figuren sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste:

- 1: Vorrichtung zum Dampfdruckgaren
- 2: Gargutträger
- 3: Garguts
- 4: Einrichtung zur Erzeugung von Mikrowellen
- 5: Garraum
- 6: druckdichte Tür
- 7: Innenraumwände
- 8: Heizvorrichtung
- 9: Ablaufrillen
- 10: Druckausgleichselement
- 11: Stirnseite des Garraums
- 12: Gargutträger-Aufnahme
- 13: Durchbrechungen in der Gargutträger-Aufnahme

## Patentansprüche

1. Vorrichtung (1) zum Dampfdruckgaren eines auf oder in einem Gargutträger (2) angeordneten Garguts (3) mittels Mikrowellenstrahlung, wobei die Vorrichtung (1) eine Einrichtung (4) zur Erzeugung von Mikrowellen und einen Garraum (5) aufweist, der von zumindest einer druckdichten Tür (6) zum Einbringen bzw. Entnehmen des zu garenden Garguts (3) und von Innenraumwänden (7) umgeben ist, **gekennzeichnet durch** eine Heizvorrichtung (8), die eingerichtet ist, die den Garraum (5) umgebenden Innenraumwände (7) teilweise oder vollständig zu beheizen.

2. Vorrichtung nach Anspruch 1, **dadurch gekennzeichnet, dass** zumindest ein Teil der Innenraumwände (7) Ablaufrillen (9) für sich während des Garvorgangs bildendes Kondensat aufweist.

3. Vorrichtung nach einem der Ansprüche 1 oder 2, **gekennzeichnet durch** ein Druckausgleichselement (10), das eingerichtet ist, sich vor oder zu Beginn der Erzeugung von Mikrowellen durch die Einrichtung (4) zur Erzeugung von Mikrowellen zu schließen und nach Abschluss der Erzeugung von Mikrowellen durch die Einrichtung (4) zur Erzeugung von Mikrowellen wieder zu öffnen.

4. Vorrichtung nach einem der voranstehenden Ansprüche, **dadurch gekennzeichnet, dass** die Innenraumwände (7) den Garraum (5) röhrenförmig umgeben, wobei die zumindest eine druckdichte Tür (6) an einer Stirnseite (11) des röhrenförmig von den Innenraumwänden (7) umgebenen Garraums (5) angeordnet ist und optional eine zweite druckdichte Tür (6) an der gegenüberliegenden Stirnseite (11) des röhrenförmig von den Innenraumwänden (7) umgebenen Garraums (5) angeordnet ist.

5. Vorrichtung nach einem der voranstehenden Ansprüche, **gekennzeichnet durch** eine Gargutträger-Aufnahme (12) mit optionalen Durchbrechungen (13) zum Ablauf von sich während des Garvorgangs bildendem Kondensat.

6. Vorrichtung nach einem der voranstehenden Ansprüche, **dadurch gekennzeichnet, dass** diese einen Boden mit darin angeordnetem Ablass für sich während der Garung von Gargut bildendem Kondenswasser aufweist.

7. Vorrichtung nach einem der voranstehenden Ansprüche, **gekennzeichnet durch** zumindest einen weiteren Garraum (5).

8. Vorrichtung nach einem der voranstehenden Ansprüche, **dadurch gekennzeichnet, dass** die Heizvorrichtung (8) eingerichtet ist, die den Garraum (5) umgebenden Innenraumwände (7) unterschiedlich stark zu beheizen, wodurch sich unterschiedliche Temperaturzonen ausbilden.

9. Verfahren zum Dampfdruckgaren eines auf oder in einem Gargutträger (2) angeordneten Garguts (3) mittels Mikrowellenstrahlung, wobei das Verfahren die folgenden Schritte aufweist:
- Bereitstellen einer Vorrichtung (1) zum Dampfdruckgaren eines auf oder in einem Gargutträger (2) angeordneten Garguts (3) mittels Mikrowellenstrahlung, wobei die Vorrichtung eine Einrichtung (4) zur Erzeugung von Mikrowellen und einen Garraum (5) aufweist, der von zumindest einer druckdichten Tür (6) zum Einbringen bzw. Entnehmen des zu garenden Garguts (3) und von Innenraumwänden (7) umgeben ist, wobei die Heizvorrichtung (8) eingerichtet ist, die den Garraum (5) umgebenden Innenraumwände (7) teilweise oder vollständig zu beheizen;
- Einbringen eines auf oder in einem Gargutträger (2) angeordneten Garguts (3) in den Garraum (5) und Verschließen der druckdichten Tür (6);
- Erzeugen von Mikrowellen mittels der Einrichtung (4) zur Erzeugung von Mikrowellen;
- Beheizen der den Garraum (5) umgebenden Innenraumwände (7) durch die Heizvorrichtung (8), wobei die Innenraumwände (7) vollständig oder teilweise beheizt werden.

10. Verfahren nach Anspruch 9, **gekennzeichnet durch** einen weiteren Schritt, in dem die Innenraumwände (7) unterschiedlich stark beheizt werden, wodurch sich unterschiedliche Temperaturzonen ausbilden, wobei optional eine sich über einer Gargutträger-Aufnahme (12) zur Aufnahme des auf oder in dem Gargutträger (2) angeordneten Garguts (3) befindende Innenraumwand (7) zumindest in dem Bereich, der sich oberhalb des Garguts (3) befindet, stärker beheizt wird als andere Innenraumwände (7).

11. Verfahren nach einem der Ansprüche 9 oder 10, **gekennzeichnet durch** einen weiteren Schritt, in dem während des Erzeugens von Mikrowellen mittels der Einrichtung (4) zur Erzeugung von Mikrowellen gebildetes Kondensat durch Ablaufrillen (9), die in zumindest einem Teil der Innenraumwände (7) angeordnet sind, in Richtung des Bodens ablaufen gelassen wird.

12. Verfahren nach einem der Ansprüche 9 bis 11, **gekennzeichnet durch** einen weiteren Schritt, in dem während des Erzeugens von Mikrowellen mittels der Einrichtung (4) zur Erzeugung von Mikrowellen gebildetes Kondensat durch einen im Boden der Vorrichtung (1) angeordneten Ablass für Kondenswasser aus der Vorrichtung (1) abgeführt wird.

## Claims

1. Device (1) for steam-pressure cooking a food item (3) placed on or in a food item support (2) using microwave radiation, wherein the device (1) comprises a microwave-generating device (4) and a cooking chamber (5), the cooking chamber (5) being surrounded by at least one pressure-tight door (6) for introducing or removing the food item (3) to be cooked and by interior walls (7), **characterized by** a heating device (8) configured to heat the interior walls (7) surrounding the cooking chamber (5) partially or completely.

2. Device according to claim 1, **characterized in that** at least a portion of the interior walls (7) comprises drainage grooves (9) for condensate that is formed during the cooking process.

3. Device according to one of claims 1 or 2, **characterized by** a pressure equalization element (10) configured to close before or at the start of microwave generation by the microwave-generating device (4) and to reopen after the completion of microwave generation by the microwave-generating device (4).

4. Device according to one of the preceding claims, **characterized in that** the interior walls (7) surround the cooking chamber (5) in a tubular manner, wherein the at least one pressure-tight door (6) is arranged on an end face (11) of the cooking chamber (5) that is surrounded by the interior walls (7) in a tubular manner and, optionally, a second pressure-tight door (6) is arranged at the opposite end face (11) of the cooking chamber (5) that is surrounded in a tubular manner by the interior walls (7).

5. Device according to one of the preceding claims, **characterized by** a receptacle for a food item support (12) having optional openings (13) for the drainage of condensate that is formed during the cooking process.

6. Device according to one of the preceding claims, **characterized in that** it comprises a bottom having a drain arranged therein for condensate that is formed during the cooking of a food item.

7. Device according to one of the preceding claims, **characterized by** at least one additional cooking chamber (5).

8. Device according to one of the preceding claims, **characterized in that** the heating device (8) is configured to heat the interior walls (7) surrounding the cooking chamber (5) to different degrees, thereby creating different temperature zones.

9. Process for steam-pressure cooking a food item (3) arranged on or in a food item support (2) using microwave radiation, wherein the process comprises the following steps:
- Providing a device (1) for steam-pressure cooking a food item (3) placed on or in a food item support (2) using microwave radiation, wherein the device comprises a microwave-generating device (4) and a cooking chamber (5), the cooking chamber (5) being surrounded by at least one pressure-tight door (6) for introducing or removing the food item (3) to be cooked and by interior walls (7), wherein the heating device (8) is configured to heat the interior walls (7) surrounding the cooking chamber (5) partially or completely;
- Introducing a food item (3) arranged on or in a food item support (2) into the cooking chamber (5) and closing the pressure-tight door (6);
- generating microwaves by means of the microwave-generating device (4);
- heating the interior walls (7) surrounding the cooking chamber (5) by the heating device (8), wherein the interior walls (7) are heated completely or partially.

10. Process according to claim 9, **characterized by** a further step in which the interior walls (7) are heated to different degrees, thereby forming different temperature zones, wherein, optionally, an interior wall (7) located above a receptacle (12) for a food item support for receiving the food item (3) that is placed on or in the food item support (2) is heated more intensely than other interior walls (7), at least in the region that is located above the food item (3).

11. Process according to one of the claims 9 or 10, **characterized by** a further step in which condensate that is formed during the generation of microwaves by means of the microwave-generating device (4) is allowed to drain toward the bottom through drainage grooves (9) arranged in at least a portion of the interior walls (7).

12. Process according to one of the claims 9 to 11, **characterized by** a further step in which condensate that is formed during the generation of microwaves by means of the microwave-generating device (4) is drained from the device (1) through a condensate drain arranged in the bottom of the device (1).

## Revendications

1. Dispositif (1) destiné à la cuisson sous pression de vapeur d'un produit à cuire (3) disposé sur ou dans un support (2) de produit à cuire, au moyen d'un rayonnement micro-ondes, le dispositif (1) comportant une unité (4) destinée à la génération de micro-ondes et un espace de cuisson (5) qui est entouré par au moins une porte étanche sous pression (6), destinée à l'introduction ou, respectivement, au retrait du produit à cuire (3) devant être cuit, et par des parois (7) d'espace intérieur, **caractérisé par** un dispositif de chauffage (8) qui est conçu pour chauffer partiellement ou entièrement les parois (7) d'espace intérieur, entourant l'espace de cuisson (5).

2. Dispositif selon la revendication 1, **caractérisé en ce qu'**au moins une partie des parois (7) d'espace intérieur comporte des rainures d'écoulement (9) pour condensat qui se forme pendant le processus de cuisson.

3. Dispositif selon l'une quelconque des revendications 1 ou 2, **caractérisé par** un élément d'équilibrage de pression (10) qui est conçu pour se fermer avant ou au début de la génération de micro-ondes par l'unité (4) destinée à la génération de micro-ondes et pour se rouvrir après l'achèvement de la génération de micro-ondes par l'unité (4) destinée à la génération de micro-ondes.

4. Dispositif selon l'une quelconque des revendications précédentes, **caractérisé en ce que** les parois (7) d'espace intérieur entourent selon une configuration tubulaire l'espace de cuisson (5), ladite au moins une porte étanche sous pression (6) étant disposée sur une face frontale (11) de l'espace de cuisson (5) entouré selon une configuration tubulaire par les parois (7) d'espace intérieur et en option une deuxième porte étanche sous pression (6) étant disposée sur la face frontale opposée (11) de l'espace de cuisson (5) entouré selon une configuration tubulaire par les parois (7) d'espace intérieur.

5. Dispositif selon l'une quelconque des revendications précédentes, **caractérisé par** un logement (12) de support de produit à cuire, comportant des ouvertures traversantes optionnelles (13) destinées à l'évacuation de condensat qui se forme pendant le processus de cuisson.

6. Dispositif selon l'une quelconque des revendications précédentes, **caractérisé en ce qu'**il comporte une sole dans laquelle est disposé un orifice d'évacuation pour eau de condensation qui se forme pendant la cuisson de produit à cuire.

7. Dispositif selon l'une quelconque des revendications précédentes, **caractérisé par** au moins un espace de cuisson (5) supplémentaire.

8. Dispositif selon l'une quelconque des revendications précédentes, **caractérisé en ce que** le dispositif de chauffage (8) est conçu pour chauffer à des puissances différentes les parois (7) d'espace intérieur, entourant l'espace de cuisson (5), de sorte que différentes zones de température se forment.

9. Procédé pour la cuisson sous pression de vapeur d'un produit à cuire (3) disposé sur ou dans un support (2) de produit à cuire, au moyen d'un rayonnement micro-ondes, le procédé comportant les étapes suivantes :
- mise à disposition d'un dispositif (1) destiné à la cuisson sous pression de vapeur d'un produit à cuire (3) disposé sur ou dans un support (2) de produit à cuire, au moyen d'un rayonnement micro-ondes, le dispositif comportant une unité (4) destinée à la génération de micro-ondes et un espace de cuisson (5) qui est entouré par au moins une porte étanche sous pression (6) destinée à l'introduction ou, respectivement, au retrait du produit à cuire (3) devant être cuit et par des parois (7) d'espace intérieur, le dispositif de chauffage (8) étant conçu pour chauffer partiellement ou entièrement les parois (7) d'espace intérieur, entourant l'espace de cuisson (5) ;
- introduction d'un produit à cuire (3) disposé sur ou dans un support (2) de produit à cuire dans l'espace de cuisson (5) et fermeture de la porte étanche sous pression (6) ;
- génération de micro-ondes au moyen du dispositif (4) destiné à la génération de micro-ondes ;
- chauffage des parois (7) d'espace intérieur, entourant l'espace de cuisson (5), par le dispositif de chauffage (8), les parois (7) d'espace intérieur étant chauffées entièrement ou partiellement.

10. Procédé selon la revendication 9, **caractérisé par** une étape supplémentaire dans laquelle les parois (7) d'espace intérieur sont chauffées à des puissances différentes, de sorte que différentes zones de température se forment, en option une paroi (7) d'espace intérieur, se trouvant au-dessus d'un logement (12) de support de produit à cuire, destiné à la réception du produit à cuire (3) disposé sur ou dans le support (2) de produit à cuire, est, au moins dans la zone qui se trouve au-dessus du produit à cuire (3), chauffée plus fortement que d'autres parois (7) d'espace intérieur.

11. Procédé selon l'une quelconque des revendications 9 ou 10, **caractérisé par** une étape supplémentaire dans laquelle du condensat, formé pendant la génération de micro-ondes au moyen de l'unité (4) destinée à la génération de micro-ondes, est laissé s'écouler en direction de la sole par des rainures d'écoulement (9) qui sont disposées dans au moins une partie des parois (7) d'espace intérieur.

12. Procédé selon l'une quelconque des revendications 9 à 11, **caractérisé par** une étape supplémentaire dans laquelle du condensat, formé pendant la génération de micro-ondes au moyen de l'unité (4) destinée à la génération de micro-ondes, est évacué hors du dispositif (1) à travers un orifice d'évacuation d'eau de condensation disposé dans la sole du dispositif (1).
